(19) Europäisches Patentamt

European Patent Office

Office européen des brevets

(11) Veröffentlichungsnummer: **0 310 805 B1**

(12)

# EUROPÄISCHE PATENTSCHRIFT

(45) Veröffentlichungstag der Patentschrift: **08.07.92**

(21) Anmeldenummer: **88113922.4**

(22) Anmeldetag: **26.08.88**

(51) Int. Cl.⁵: **B23B** 3/30, B23B 13/00

(54) **Werkzeugmaschine mit zwei sich koaxial gegenüber-liegenden Werkstückspindeln.**

(30) Priorität: **02.10.87 DE 3733405**

(43) Veröffentlichungstag der Anmeldung:
**12.04.89 Patentblatt 89/15**

(45) Bekanntmachung des Hinweises auf die
Patenterteilung:
**08.07.92 Patentblatt 92/28**

(84) Benannte Vertragsstaaten:
**CH DE ES FR GB IT LI SE**

(56) Entgegenhaltungen:
**AT-B- 338 587       CH-A- 572 779**
**DE-A- 1 502 012     DE-A- 2 128 777**
**DE-C- 595 656       JP-B- 5 114 186**

(73) Patentinhaber: **GILDEMEISTER ITALIANA
S.p.A.
Via Donizetti 138
I-24030 Brembate di Sopra(IT)**

(72) Erfinder: **Matthey, Maurice
103 Route de Suisse
CH-1290 Versoix(CH)**

(74) Vertreter: **Patentanwälte Dipl.-Ing. Bodo Thielking Dipl.-Ing. Otto Elbertzhagen
Gadderbaumer Strasse 20
W-4800 Bielefeld 1(DE)**

## Beschreibung

Die Erfindung betrifft eine Werkzeugmaschine nach dem Oberbegriff des Anspruchs 1.

Bei einer bekannten Werkzeugmaschine dieser Art AT-B-338 587) wird das fertige Drehteil durch das nachfolgende Drehteil rückwärtig aus der zweiten Werkstückspindel ausgestoßen. Das fertig bearbeitete Drehteil muß dabei während eines gesamten Drehvorgangs bis zum Ausstoßvorgang in der rotierenden Werkstückspindel verbleiben und kann damit an seiner Oberfläche beschädigt werden.

Bei einer anderen bekannten Werkzeugmaschine ähnlicher Art (JP-A 51-14186) wird einer ortsfesten ersten Werkstückspindel eine Werkstoffstange zugeführt, von der axial beweglichen Gegenspindel ergriffen, und entsprechend der zu bearbeitenden Werkstücklänge aus dem Spannfutter der ersten Werkstückspindel vorgezogen.

Nach der Bearbeitung der ersten Seite wird das bearbeitete Ende erneut in der Gegenspindel gespannt und abgestochen. Das von der Gegenspindel gehaltene Werkstück kann dann auf der Abstichseite fertig bearbeitet werden.

Zwar erlaubt die bekannte Werkzeugmaschine das Zuführen des Rohteils und den Transport des einseitig bearbeiteten Werkstücks von der ersten zur zweiten Werkstückspindel, ohne daß eine Handhabungseinrichtung oder ein Bedienungsmann in den Arbeitsraum der Maschine eingreifen müssen.

Dieser Vorteil wird bei der bekannten Maschine aber dadurch teilweise wieder zunichte gemacht, daß die fertig bearbeiteten Werkstücke mit besonderen Maßnahmen bzw. Einrichtungen aus dem Arbeitsraum abgeführt werden müssen. Hierzu muß die Arbeitsraumverkleidung geöffnet werden, damit das fertig bearbeitete Werkstück entweder manuell entnommen werden kann oder es ist eine zusätzliche Öffnung für eine automatische Handhabungseinrichtung in der Arbeitsraumabdeckung nötig. Hierdurch kann es leicht zum Austritt von Kühlflüssigkeit und Spänen kommen.

Es ist ferner eine Werkzeugmaschine bekannt (DE-OS 15 02 012), bei der ein von außen erfolgender Eingriff in den Arbeitsraum nicht erforderlich ist. Bei dieser bekannten Maschine wird das Werkstück durch die Bohrung derselben Spindel sowohl zugeführt als auch wieder abgeführt. Diese bekannte Maschine ist aber lediglich geeignet für die kopfseitige Bearbeitung langer Werkstoffstangen.

Ausgehend von diesem Stand der Technik liegt der Erfindung die Aufgabe zugrunde, die Werkzeugmaschine der als bekannt vorausgesetzten Art so auszubilden, daß eine Entnahme des fertig bearbeiteten Werkstücks unmittelbar nach dessen Fertigstellung und ohne Eingriff in den Arbeitsraum möglich ist.

Die Lösung dieser Aufgabe erfolgt bei einer Werkzeugmaschine der eingangs genannten Art erfindungsgemäß dadurch, daß an der Rückseite der zweiten Werkstückspindel eine Werkstückgreifeinrichtung vorgesehen ist, welche für ein Eintauchen in die zweite Werkstückspindel und für ein Herausziehen des fertig bearbeiteten Werkstücks aus der Spindelbohrung ausgebildet ist.

Die erfindungsgemäße Konstruktion erlaubt eine schnelle und schonende Entfernung des fertig gedrehten Werkteils aus der Maschine unmittelbar nach dessen Fertigstellung.

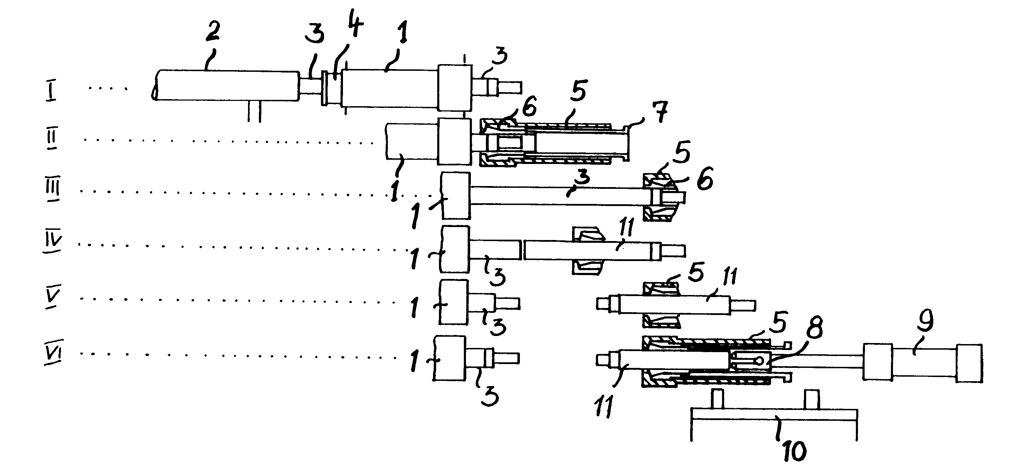

Nachstehend wird die Erfindung anhand der Zeichnung im einzelnen beschrieben. In der Zeichnung sind lediglich die im Zusammenhang mit dieser Erfindung maßgeblichen Teile einer Werkzeugmaschine dargestellt. Diese Teile sind in unterschiedlichen Betriebszuständen gezeigt, welche fortlaufend von I bis VI beziffert sind. Auf die Darstellung der Einzelheiten und der Bearbeitungswerkzeuge wurde verzichtet.

Eine Werkstückspindel 1 ist ortsfest drehbar gelagert. Eine unbearbeitete Werkstoffstange 3 ragt durch die hohle Werkstückspindel 1 hindurch und wird mittels einer Spannzange darin gespannt. Die nicht dargestellte Spannzange wird durch das Spannrohr 4 betätigt. Hinter der Werkstückspindel 1 befindet sich ein Führungsrohr 2 für das hintere Ende der Werkstoffstange 3. In Position I wird die Kopfseite der Werkstoffstange 3 fertig bearbeitet. Die Gegenspindel ist in dieser Phase nicht dargestellt. Ihre Position entspricht derjenigen bei VI.

In der Phase II wird die zweite Werkstückspindel oder Gegenspindel 5, die in einem nicht dargestellten Spindelkasten angeordnet ist, nach links vorgeschoben. Dabei gleitet die geöffnete Spannzange 6 über den bearbeiteten Teil der Werkstoffstange 3.

In der vorgeschobenen Position wird die Spannzange 6 durch das Spannrohr 7 geschlossen. Gleichzeitig öffnet die Spannzange der Werkstückspindel 1. Anschließend wird die zweite Werkstückspindel 5 in die Position gemäß III verfahren. Dabei nimmt sie die Werkstoffstange 3 mit.

Bei dem dargestellten langen Drehteil wird für ein sicheres Halten des Werkstücks in der Nähe der Bearbeitungsstelle die Spannzange 6 noch einmal geöffnet und mit der zweiten Werkstückspindel 5 in die Position gemäß IV vorgefahren, wo ein erneutes Spannen erfolgt.

Danach erfolgt in Position IV das Abtrennen des mit 11 bezeichneten Werkstücks von der Stange.

Position V zeigt die zweite Werkstückspindel 5 in der Position, in der das Werkstück an der Abstichseite, also an der gemäß Zeichnung linken Seite, fertig bearbeitet wird. Gleichzeitig kann die Bearbeitung des nächsten Werkstücks in der Weise erfolgen, wie dies bei I beschrieben wurde.

Nach Beendigung des Bearbeitungsvorgangs wird ein Greifer 8 von einem Linearantrieb 9 von hinten in die Bohrung der Gegenspindel 5 eingeführt und ergreift das Werkstück, wie dies bei VI dargestellt ist. Wenn anschließend die Gegenspindel 5 mit geöffneter Spannzange in die Position gemäß II verfahren wird, wird das fertig bearbeitete Werkstück aus der Gegenspindel 5 herausgezogen und auf einer Palette 10 abgelegt.

**Patentansprüche**

1. Werkzeugmaschine mit zwei sich koaxial gegenüberliegenden Werkstückspindeln (1; 5) mit Spindelbohrungen, deren mindestens eine (5) in Längsrichtung beweglich ist und zur Aufnahme des stangenförmigen Rohteils oder der Werkstoffstange (3) von ihrer Rückseite ausgebildet ist, wobei die zweite Werkstückspindel (5) zur Aufnahme des einseitig vorbearbeiteten Werkstücks und zu dessen Spannen an der vorbearbeiteten Seite ausgebildet ist und die zweite Werkstückspindel (5) für ein Durchtreten des fertig bearbeiteten Werkstücks (11) und für ein Abführen durch die Spindelbohrung aus deren Rückseite ausgebildet ist,
dadurch gekennzeichnet,
daß an der Rückseite der zweiten Werkstückspindel (5) eine Werkstückgreifeinrichtung (8) vorgesehen ist, welche für ein Eintauchen in die zweite Werkstückspindel (5) und für ein Herausziehen des fertig bearbeiteten Werkstücks aus der Spindelbohrung ausgebildet ist.

2. Werkzeugmaschine nach Anspruch 1,
dadurch gekennzeichnet,
daß die zweite Werkstückspindel (5) in Längsrichtung beweglich ist und eine Werkstückauffangvorrichtung für das durch die zweite Werkstückspindel nach hinten entnommene Werkstück (11) mit der zweiten Werkstückspindel (5) gemeinsam verfahrbar ist.

3. Werkzeugmaschine nach Anspruch 1 oder 2,
dadurch gekennzeichnet,
daß an der Rückseite der zweiten Werkstückspindel (5) eine in Achsrichung der zweiten Werkstückspindel (5) verfahrbare, koaxial angeordnete federnde Spannzange angeordnet ist, die in Achsrichtung relativ zur zweiten Werkstückspindel (5) verschieblich ist.

**Claims**

1. Machine tool with two coaxially opposite workpiece spindles (1;5) with spindle bores, of which at least one (5) is movable in the longitudinal direction and is designed to hold the rod-like raw part or the material rod (3) from its rear side, wherein the second workpiece spindle (5) is designed to hold the workpiece which has been finished on one side and to clamp it on the processed side and the second workpiece spindle (5) is designed for passage of the finished workpiece (11) and for discharge through the spindle bore from the rear side, characterised in that
at the back of the second workpiece spindle (5) there is a workpiece gripper unit (8) which is designed for projecting into the second workpiece spindle (5) and for removing the finished workpiece from the spindle bore.

2. Machine tool according to claim 1 characterised in that the second workpiece spindle (5) is movable in the longitudinal direction and a workpiece receiver unit for the workpiece (11) which has been removed backwards by the second workpiece spindle can be moved together with the second workpiece spindle (5).

3. Machine tool according to claim 1 or 2 characterised in that at the back of the second workpiece spindle (5) there is a coaxially mounted resilient tension grip which is movable in the axial direction of the second workpiece spindle (5) and which is displaceable in the axial direction relative to the second workpiece spindle (5).

**Revendications**

1. Machine-outil avec deux broches porte-pièce (1; 5), disposées, coaxialement, vis-à-vis l'une de l'autre, avec forures de broche, dont une (5) au moins est mobile longitudinalement et conçue pour accueillir, par sa partie arrière, une pièce brute en forme de barre ou la barre de matériau à usiner (3), la seconde broche porte-pièce (5) étant conçue pour recevoir la pièce à usiner, prétraitée unilatéralement, et la serrer du côté prétraitée, la seconde-broche porte-pièce (5) étant conçue pour la poussée de passage et l'évacuation de la pièce usinée achevée (11) par la forure de la broche, du côté arrière,
caractérisée par le fait
qu'à l'arrière de la seconde broche porte-pièce (5), un dispositif de préhension (8) est prévu, lequel est conçu en vue de l'introduction dans la seconde broche (5) et de l'extraction, hors de la forure de la broche, de la pièce usinée terminée.

**2.** Machine-outil selon revendication 1, caractérisée par le fait que la seconde broche porte-pièce (5) est mobile longitudinalement et qu'un dispositif de réception de la pièce (11), évacuée à l'arrière par la seconde broche porte-pièce est déplaçable en commun avec la seconde broche porte-pièce (5).

**3.** Machine-outil selon revendication 1 ou 2, caractérisée par le fait qu'une pince de serrage, mobile dans le sens axial de la seconde broche porte-pièce (5) et disposée coaxialement, faisant ressort, équipe la partie arrière de la seconde broche-porte-pièce (5) et est déplaçable axialement par rapport à la seconde broche porte-pièce (5).